Europäisches Patentamt

European Patent Office

Office européen des brevets

(19)

(11) Veröffentlichungsnummer: **0 465 424 B1**

(12) **EUROPÄISCHE PATENTSCHRIFT**

(45) Veröffentlichungstag der Patentschrift: **07.12.94**

(51) Int. Cl.5: **B01D 27/06**

(21) Anmeldenummer: **91810501.6**

(22) Anmeldetag: **26.06.91**

(54) **Tiefbettfilter, Verfahren zur Herstellung einer Filterschicht und Filtermodul.**

(30) Priorität: **05.07.90 CH 2239/90**

(43) Veröffentlichungstag der Anmeldung:
**08.01.92 Patentblatt  92/02**

(45) Bekanntmachung des Hinweises auf die
Patenterteilung:
**07.12.94 Patentblatt  94/49**

(84) Benannte Vertragsstaaten:
**AT BE CH DE DK ES FR GB IT LI LU NL SE**

(56) Entgegenhaltungen:
**EP-A- 0 106 908**
**EP-A- 0 352 888**
**FR-A- 2 347 081**
**FR-A- 2 550 464**
**US-A- 4 274 914**

(73) Patentinhaber: **Filtrox-Werk AG**
**Moosmühlenstrasse 6**
**CH-9001 St. Gallen (CH)**

(72) Erfinder: **Meyer, Karl-Otto, Dr.**
**Breitidörfliweg 2**
**CH-9220 Bischofszell (CH)**

(74) Vertreter: **Hepp, Dieter et al**
**Hepp, Wenger & Ryffel AG,**
**Marktgasse 18**
**CH-9500 Wil (CH)**

**Beschreibung**

Die Erfindung betrifft ein Tiefbettfilter, ein Verfahren zum Herstellen einer Filterschicht und ein Filtermodul mit Fluidanschlüssen zur Abscheidung von Fluidinhaltstoffen.

Tiefenfilter oder Tiefbettfilter zum Abscheiden von Trubstoffen aus Flüssigkeiten sind in den verschiedensten Ausführungsformen bekannt und gebräuchlich. So ist z.B. aus der deutschen Patentschrift DE-C-33 16 540 ein Tiefenfilter bekannt, bei dem das Filterbett aus mehreren dünnen permeablen Membranschichten besteht, die in Abständen hintereinander senkrecht zur Hauptströmungsrichtung angeordnet sind. Dabei handelt es sich also um eine Stufenfiltration mit hintereinander geschalteten Membranfiltern.

Aus der DE-A-38 05 299 ist ein Integralfilter bekannt, bei dem ein permeabler Rohrmantel aus mehreren rohrförmigen Filterelementen mit unterschiedlichen Filtereigenschaften vorgesehen ist. Der Rohrmantel kann dabei "plissiert" ausgebildet sein. Die plissierten Filterkerzen bestehen aus gitterförmigen, perforierten Sicherungsgliedern, welche den Filterkerzen die nötige radiale und axiale Stabilität für Druck- und Zugbelastungen geben. Als Filtermedien werden vor allem Kapillarmembranen, Glasfaserfilter oder dergleichen vorgeschlagen. Als Filterhilfsmittel ist Kieselgur, Perlit, Asbest oder Zellstoff vorgesehen. Zur Erhöhung der Klärschärfe ist vorgesehen, Kieselgur in den Zwischenraum zwischen zwei ineinander angeordneten Filterkerzen einzubringen.

Plissierte Papierfilter und plissierte Membranfilter sind vor allem auch zum Einsatz als Luftfilter in den verschiedensten Ausführungsformen bekannt und gebräuchlich. Die Vorteile grosser Filterfläche auf kleinstem Raum sowie niedere Strömungsgeschwindigkeiten aufgrund der grossen Filterfläche sind offensichtlich.

Die FR-A-23 47 081 zeigt ein solches Filter aus Glasfasern mit einer Faserdicke von 0,1 bis 0,9$\mu$m und einer Faserlänge zwischen 1mm und 2mm, wobei auch Fasern bis zu 6mm enthalten sein können. Das bekannte Filter ist mehrschichtig aufgebaut und mit einer Stützschicht versehen. Ein solches Filter ist nicht für die erfindungsgemäss erschlossenen Anwendungsgebiete einsetzbar.

Bekannt sind auch Linsenmodule, bei denen eine Vielzahl von scheibenförmig ausgebildeten, im Randbereich miteinander verbundenen, selbsttragenden Filterschichten in einem gemeinsamen Gehäuse angeordnet sind und durchströmt werden. Ein derartiges Linsenmodul ist z.B. in der US-A-4,704,207 beschrieben.

Linsenmodule dieser Bauart sind seit vielen Jahren im Einsatz, weisen jedoch eine Reihe von Nachteilen auf:
- sie neigen zu Verwerfungen der einzelnen Linsen beim Sterilisieren und anschliessenden Abkühlen;
- im rauhen Praxisbetrieb können die Module beim Abkühlen nach einem Sterilisiervorgang leicht bersten;
- sie besitzen eine grosse Anzahl von Dichtungen, wodurch das Risiko einer Trubpassage erhöht wird;
- bei Linsenkontakt (Berührung der Anströmflächen benachbarter Linsen desselben Moduls), wie er in der Praxis häufig vorkommt, kann die effektive Filterfläche nicht voll ausgenutzt werden und es kommt infolgedessen zu Veränderungen der Strömungsverhältnisse; schliesslich sind Linsenmodule nicht ohne Bruch rückspülbar.

Diese Nachteile vermeidet ein Modul mit plissierten Filterschichten. Ein weiterer Vorteil ist es, dass in einem Modul mit plissierten Filterschichten eine grössere effektive Filterfläche unterzubringen ist als in einem Linsenmodul, bezogen auf dasselbe Modul-Volumen.

Tiefenfilterschichten sind seit nahezu 80 Jahren bekannt. Schon bald nach dem Aufkommen der Linsenmodule auf Basis von Tiefenfiltern entstand der Wunsch, die effektive Filterfläche pro Volumeneinheit des Moduls durch Faltung der Filterschichten zu erhöhen. Es ist bislang nicht gelungen, selbsttragende Filterschichten aus Zellstoff und Kieselgur und/oder Perlite in einer Schichtdicke, wie sie vergleichsweise für Linsenmodule eingesetzt werden, zu plissieren. Offensichtlich wurde der Fachmann von Bedenken abgehalten, dass diese spröden und unelastischen Filterschichten den beim Plissiervorgang auftretenden Zugkräften nicht standhalten und einreissen oder brechen; dadurch würde die Klärschärfe der Filterschichten entweder unzulässig geschwächt oder gar aufgehoben werden.

Die Erfindung überwindet dies und schafft ein Tiefbettfilter mit einer Schichtdicke von wenigstens 1mm, vorzugsweise 2-3mm, mit einer plissierten, selbsttragenden Filterschicht, die ein Gemisch aus langfaserigem und kurzfaserigem Material aus Zellstoff- und/oder Kunstfasern oder aus Micro-Glasfasern oder aus Keramikfasern und vorzugsweise Kieselgur und/oder Perlit enthält. Damit schafft die Erfindung erstmals und auf völlig überraschende Weise eine plissierbare Tiefbettfilterschicht und ermöglicht eine sprunghafte, in diesem ausgeforschten technischen Gebiet nicht für möglich gehaltene Bereicherung der Technik.

Zellstoff eignet sich gut zum Plissieren und gleichzeitig als Filtermaterial.

2

EP 0 465 424 B1

Kunstfasern haben den Vorteil, dass sie chemisch besser regenerierbar sind (z.B. mit Natronlauge) und dass sie nicht vorgespült werden müssen.

Unter "Langfaser" werden erfindungsgemäss Fasern mit einer Länge von etwa 1mm bis 6mm verstanden. Kurzfasern sind definitionsgemäss kürzer als 1mm. Besonders vorteilhaft lässt sich dabei die Erfindung mit einem Langfaser-Anteil von wenigstens 20%G verwirklichen. Der Langfaseranteil kann je nach Anwendungsfall und Beimengung von Kurzfasern variieren. Bei Filtern zur Sterilfiltration sind z.B. kleinere Langfaseranteile wünschenswert, um die Passage von Mikroorganismen auszuschliessen.

Besonders gute Filterleistung bei guter Plissierbarkeit und Stabilität des Filters ergibt sich, wenn der Langfaseranteil von 1mm bis 6mm höchstens 50%G beträgt.

Besonders gute Plissiereigenschaften ergeben sich, wenn die Fasern eine Faserlängen-Verteilung aufweisen, bei der wenigstens 5%G der Fasern eine Länge von etwa 3mm bis 6mm aufweisen. Vorteilhaft ist es dabei, wenn wenigstens 10%G Langfasern mit einer Länge von 1 bis 3mm vorgesehen werden. Sowohl die Filtereigenschaften als auch die Plissiereigenschaften sind ausgeglichen gut, wenn die Filterschicht wenigstens 20%G und höchstens 50%G Kurzfasern mit einer Länge von kleiner 1mm enthält. Eine gute Faserlängenverteilung lässt sich bei Zellstoff z.B. dann erreichen, wenn die Fasern auf einen Wert von 12° bis 25° SR (Schopper Riegler) gemahlen sind.

Die erfindungsgemäss eingesetzten Zellstofffasern lassen sich vorteilhaft durch Kunstfasern wenigstens zum Teil ersetzen oder ergänzen. Dabei eignen sich besonders Polypropylen-Polyäthylen-homo- oder -copolymere, Polyester-, Polyamid-, Polyacrylnitril-Fasern in einer Faserlänge von etwa 0,4 bis 3,0mm und einer Faserdicke von 10 bis 80$\mu$m, vorzugsweise in Form von hochfibrilliertem Synthesepulp mit einer spezifischen Oberfläche von = 1 m$^2$/g, sowie Stapelfasern in einer Länge von maximal 6 mm und Titern im Bereich 1-4 dtex. Der Kunstfaseranteil kann dabei bis zu 100%G der Zellstofffasern betragen. (Prozentangaben sind Gewichtsprozent im trockenen Zustand, Restfeuchte ≈ 2%.)

Erfindungsgemäss lassen sich auch vorteilhaft Keramikfasern einsetzen. Derartige Keramikfasern aus Silizium- oder Aluminiumdioxid mit einer Faserdicke von gleich oder kleiner 10$\mu$m mit einer Faserlänge von kleiner 6mm werden z.B. von der Firma DYKO-MORGAN Fasertechnik GmbH, D-4000 Düsseldorf 11 (BRD) angeboten. (Die Keramikfasern werden in wässriger Dispersion in einem Highshearing-Prozess auf die passende Faserlänge gebracht).

Die "Micro-Glasfasern" der Firma Bayer AG, D-5090 Leverkusen, oder andere vergleichbare Mikro-Glasfasern werden ebenfalls in der erfindungsgemässen Verteilung eingesetzt. Derartige Glasfasern weisen einen Faserdurchmesser von etwa 0,5 bis 3,0$\mu$m auf.

Für bestimmte Medien eignen sich vorzugsweise Polyolefinfasern.

Erfindungsgemässe Tiefbettfilter lassen sich auch ohne Beimengung von Filterhilfsstoffen, wie z.B. Kieselgur und/oder Perlite herstellen.

Gute Rückhalteleistung bei guter Plissierbarkeit ergibt sich vor allem, wenn der Anteil an Kieselgur und/oder Perlit grösser ist als 20%G und kleiner als 50%G, und vorteilhaft etwa 40%G, bezogen auf das Gesamtgewicht der Filterschicht und wenn vorzugsweise der kurzfaserige Zellstoff in hochgemahlener Form vorliegt. (Die Prozentangaben beziehen sich dabei auf die trockene Filterschicht mit einer Restfeuchte von etwa 2%.)

Rückhalteleistung und Plissierbarkeit sind gegenläufige Eigenschaften einer Tiefenfilterschicht. Sie hängen in hohem Masse vom Kieselgurgehalt ab. Ein besonders guter Kompromiss hinsichtlich beider Eigenschaften liegt vor bei Schichten mit Gehalten an Kieselgur/Perlite im Bereich 35 bis 45%G, bezogen auf das Gesamtgewicht der Filterschicht.

Vorteilhaft lassen sich diese Tiefbettfilter gemäss der Erfindung in einem Filtermodul zur Stufenfiltration einsetzen, wobei die Porosität der einzelnen plissierten Filterschichtringe/Filterelemente innerhalb desselben Moduls in Durchströmrichtung abnimmt.

Konventionell werden Filterschichten aus Zellstoff und Kieselgur auf einer Langsiebmaschine hergestellt, auf der sie von etwa 98% Wasseranteil auf ca. 65% Restfeuchte entwässert werden. Anschliessend wird die verfestigte Filterschicht getrocknet. Die Erfindung schlägt vor, die Filterschicht mit einem Wassergehalt von wenigstens 5%G und höchstens 30%G bei einer Temperatur von höchstens 150°C, vorzugsweise jedoch bei etwa 100°C bis 140°C (bei Zellstofffasern) zu plissieren. Es hat sich gezeigt, dass bei Einhaltung dieser Parameter der Plissiemorgang optimal schonend und mit der geringstmöglichen Gefahr für Brüche durchgeführt werden kann.

Sofern die Filterschicht ausser Zellstofffasern auch noch Kunstfasern enthält, ist im Falle thermoplastischer Kunstfasern die Filterschicht beim Plissieren auf eine Temperatur zu erhitzen, die unterhalb der Temperatur liegt, bei welcher die Kunstfasern erweichen oder schmelzen. Auf diese Weise wird gewährleistet, dass die Elastizität und die Morphologie (Fibrillierung) der Kunstfasern in ihrer ursprünglichen Form erhalten bleiben.

3

EP 0 465 424 B1

Die Nassverfestigung geschieht wie üblich durch Zusatz wässeriger Lösungen von Nassfestmitteln zur Pulpe. Die Nassfestigkeit lässt sich jedoch auch dadurch einstellen, dass der Zellstoffpulpe ein Gemisch von thermoplastischen Kunstfasern mit signifikant verschiedenen Erweichungsintervallen beigemengt wird. In solchen Fällen wird die Trocknung der Filterschicht und später ihre Plissierung thermisch so geführt, dass die Objekt-Temperatur mindestens 20°C über dem Erweichungspunkt der tiefer schmelzenden Kunstfaser liegt und andererseits mindestens 20°C unter dem Erweichungspunkt der höher schmelzenden Faser. Selbstverständlich kann die Nassverfestigung auch durch Kombination von Polyelektrolytzusatz und Fasersinterung vorgenommen werden.

Die Erfindung ist im folgenden in Ausführungsbeispielen anhand von Zeichnungen näher erläutert. Es zeigen:

| Figur 1 | Die schematische Darstellung eines Filtermoduls mit plissierter Filterschicht in Seitenansicht, |
| Figur 2 | das Filtermodul gemäss Figur 1 im Querschnitt, |
| Figur 3 | ein Filtermodul analog Figur 2, jedoch in Gegenrichtung betrieben, |
| Figur 4 | ein Filtermodul gemäss Figur 2 mit einem zusätzlichen Sicherheitsfilter, |
| Figur 5 | ein Filtermodul gemäss Figur 3 mit einem zusätzlichen Sicherheitsfilter, jedoch in Gegenrichtung betrieben, |
| Figur 6 | eine Draufsicht auf ein Filtermodul gemäss Figur 1 bis 5, |
| Figur 7 | einen horizontalen Teilschnitt durch das Filtermodul in der Darstellung gemäss Figur 6, |
| Figur 8 | einen horizontalen Teilschnitt durch das Filtermodul gemäss Darstellung in Figur 4, |
| Figur 9 | einen horizontalen Teilschnitt durch das Filtermodul in der Darstellung gemäss Figur 5, |
| Fig.10 + 11 | die schematische Darstellung von Filtermodulen in Filtergehäusen in verschiedenen Anordnungen, |
| Fig.12 + 13 | simultan plissierte Mehrfach-Filterschichten und |
| Figur 14 | eine plissierte Filterschicht mit den Merkmalen der Erfindung mit Abström-Vlies. |

Zur Herstellung eines plissierten Filters unter Verwendung einer der beschriebenen Filterschichten wird das Filterschichtmaterial mittels Sprühdüse oder Dampfstrahl befeuchtet. Die beidseitig mit einem Abdeckpapier geschützte Bahn kann je nach Schichtzusammensetzung entweder ohne Vorwärmung direkt in die Plissiermaschine einlaufen oder aber nach Vorwärmung auf maximal 150°C.

Die Plissierung von Filterschichten der beschriebenen Art gelingt nicht nur mit der einlagigen Bahn, sondern auch simultan mit zwei oder drei übereinanderliegenden Filterschicht-Bahnen. Zur Verbesserung der Abströmverhältnisse kann simultan mit der/den Filterschichten auch ein Gewebe, Vlies oder Netzextrudat plissiert werden.

Plissierte Filterschichten der beschriebenen Art können vor allem in zylindrischer Anordnung durch Nahtverklebung und Endkappenabdichtung zu Modulen verarbeitet werden. Ein Modul kann wahlweise entweder nur einen oder mehrere konzentrische Ringe plissierter Filtermedien enthalten. Der einzelne Ring kann wahlweise aus einer einlagigen, plissierten Filterschicht bestehen oder aus mehreren simultan plissierten Filterschichten.

Durch Anordnung von Filterschichten unterschiedlicher Porosität in Fliessrichtung lässt sich mit ein und demselben Modul eine Stufenfiltration durchführen.

Die Filtrationsrichtung ist umkehrbar, also wahlweise von aussen nach innen oder von innen nach aussen.

Module der beschriebenen Art sind rückspülbar.

Module mit simultan plissierten Mehrfachschichten pro Ring besitzen zwangsläufig infolge der höheren Gesamtschichtdicke eine geringe Faltenzahl pro Umfang und demzufolge eine kleinere Mengenleistung, andererseits erhöhen sich dadurch die Trubaufnahmekapazität und die Standzeit.

4

Die Filterschichten gemäss Ausführungsbeispielen weisen folgende Zusammensetzung auf:

**REZEPTUR-BEISPIELE**

| Beispiel-Nr. | | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| Kieselgur | % | 45 | 30 | 35 | 35 | 30 | 40 | 45 | 35 | - | 40 | 30 | - | 40 | 30 |
| Zellstoff-Langfaser | % | 30 | 30 | 30 | 25 | 25 | - | - | - | - | - | - | - | - | - |
| Mahlgrad | SR | 20 | 15 | 15 | 15 | 20 | - | - | - | - | - | - | - | - | - |
| Zellstoff-Kurzfaser | % | 25 | 20 | 15 | 15 | 15 | 30 | - | 25 | - | - | - | - | - | - |
| Mahlgrad | SR | 65 | 65 | 70 | 65 | 65 | 70 | - | 70 | - | - | - | - | - | - |
| PE-Synthesepulp | % | - | 20 | - | - | 10 | - | - | - | - | - | - | - | - | - |
| PP-Synthesepulp | % | - | - | 20 | 20 | 20 | - | - | 15 | - | - | 30 | - | - | - |
| PP-Stapelfaser (3,4 dtex/4 mm) | % | - | - | - | 5 | - | - | - | - | - | - | - | - | - | 30 |
| Linters | % | - | - | - | - | - | 30 | 30 | 25 | - | - | - | - | - | - |
| Mahlgrad | SR | - | - | - | - | - | 20 | 20 | 20 | - | - | - | - | - | - |
| Linters | % | - | - | - | - | - | - | 25 | - | - | - | - | - | - | - |
| Mahlgrad | SR | - | - | - | - | - | - | 65 | - | - | - | - | - | - | - |
| Keramikfasern 1) | % | - | - | - | - | - | - | - | - | 100 | 60 | 40 | - | - | - |
| Mikro-Glasfasern 2) | % | - | - | - | - | - | - | - | - | - | - | - | 100 | 60 | 40 |
| Plissier-Temperatur | °C | 150 | ≤120 | 140 | 140 | 140 | 100 | 100 | 100 | 150 | 150 | 150 | 150 | 150 | 150 |

1) KAOWOOL-Fasern / DYKO-MORGAN Fasertechnik GmbH, D-4000 Düsseldorf 11
2) BAYER AG, D-5090 Leverkusen

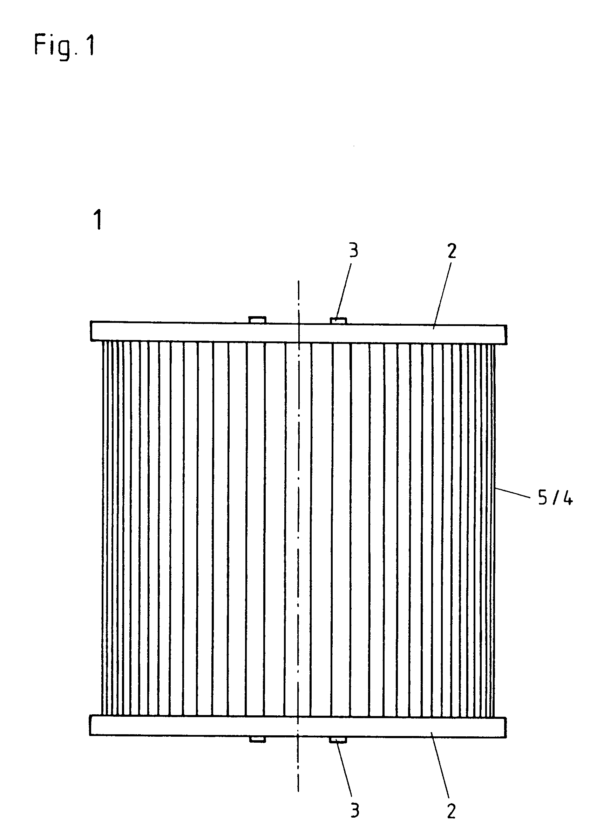

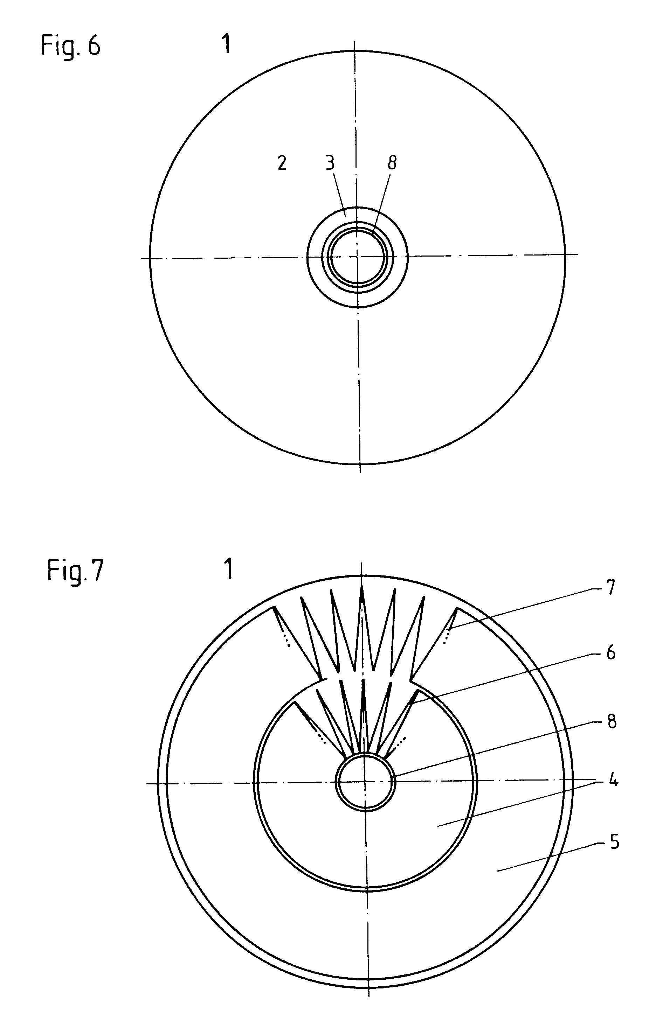

Figur 1, 6 und 7 zeigen ein Filtermodul 1 mit je einer auf beiden Stirnseiten angebrachten scheibenförmigen Kunststoff-Abdichtung 2, an der Dichtringe 3 zum Anschluss an eine nicht dargestellte Leitung vorgesehen sind. Mit den Abdichtungen 2 sind zylindrische Filterelemente 4 und 5 verbunden.

Wie sich vor allem aus Figur 7 bis 9 ergibt, bestehen die Filterelemente 4 und 5 aus einer plissierten Filterschicht 6, 7.

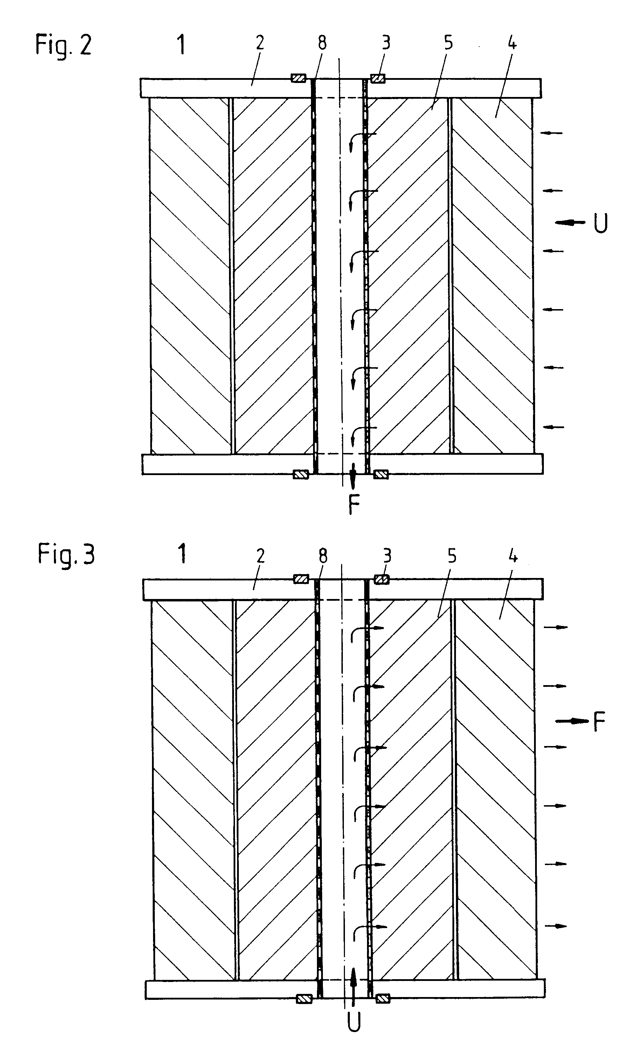

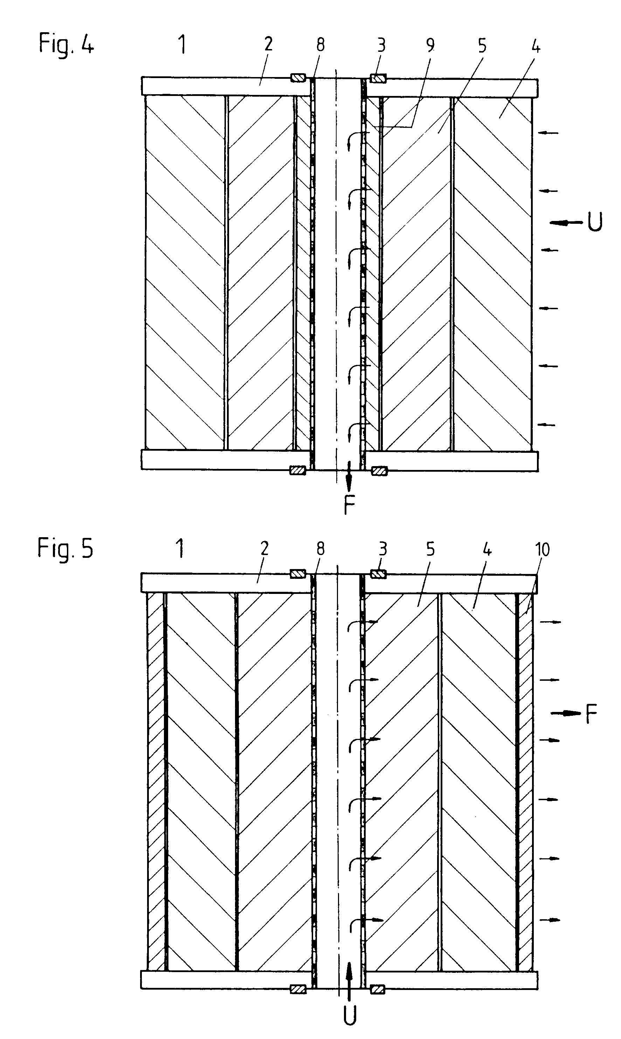

Beim Ausführungsbeispiel gemäss Figur 2 und 4 wird das Unfiltrat U von aussen dem Filtermodul 1 zugeführt, so dass es zunächst das Filterelement 4 und sodann das Filterelement 5 durchströmt und sodann in einem schematisch dargestellten Lochrohr 8 abgeführt wird. Beim Ausführungsbeispiel gemäss Figur 2 entspricht die äussere Filterschicht der Schichtnummer 2 in der vorstehenden Tabelle. Der Mahlgrad des Langfaseranteils beträgt 15 SR. Die innere Schicht 5 weist einen höheren Mahlgrad von 20SR gemäss Schichtnummer 1 in der vorstehenden Aufstellung auf.

Beim Ausführungsbeispiel gemäss Figur 3 und 5 wird das Unfiltrat U durch das Lochrohr 8 zugeführt, so dass das Filterelement 1 von innen nach aussen durchströmt wird. Die innere Schicht entspricht der Schichtnummer 5 und die äussere Schicht entspricht der Schichtnummer 4 gemäss vorstehender Tabelle.

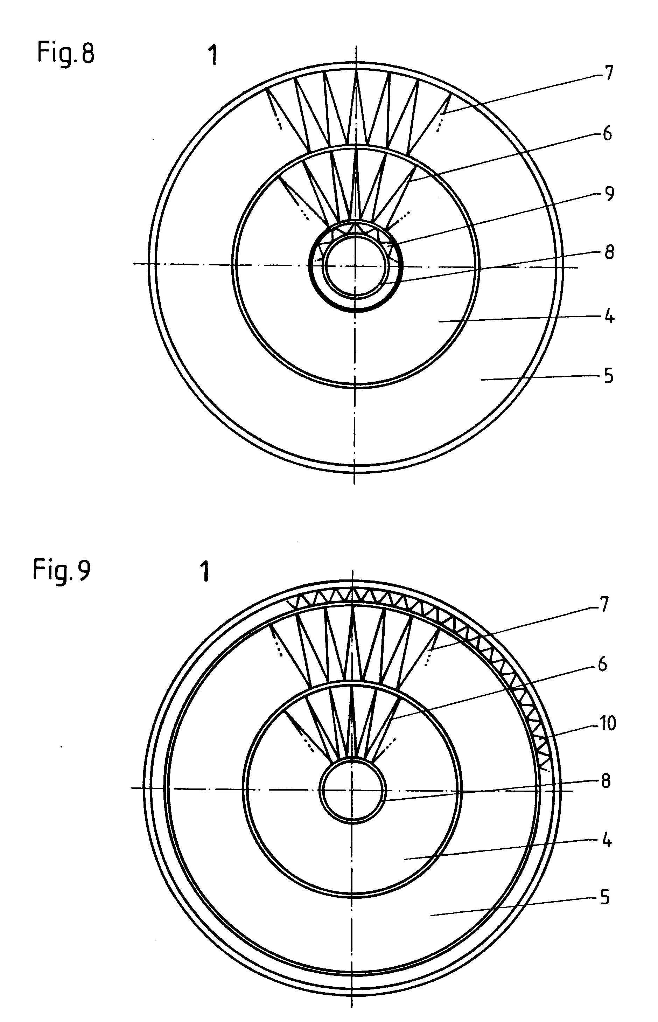

Bei den Ausführungsbeispielen gemäss Figuren 4 und 8 bzw. 5 und 9 sind abströmseitig - also "innen" in Figur 4 und 8 und "aussen" in Figur 5 und 9 zusätzliche Sicherheitsfilter (Membranfilter) 9 bzw. 10 vorgesehen.

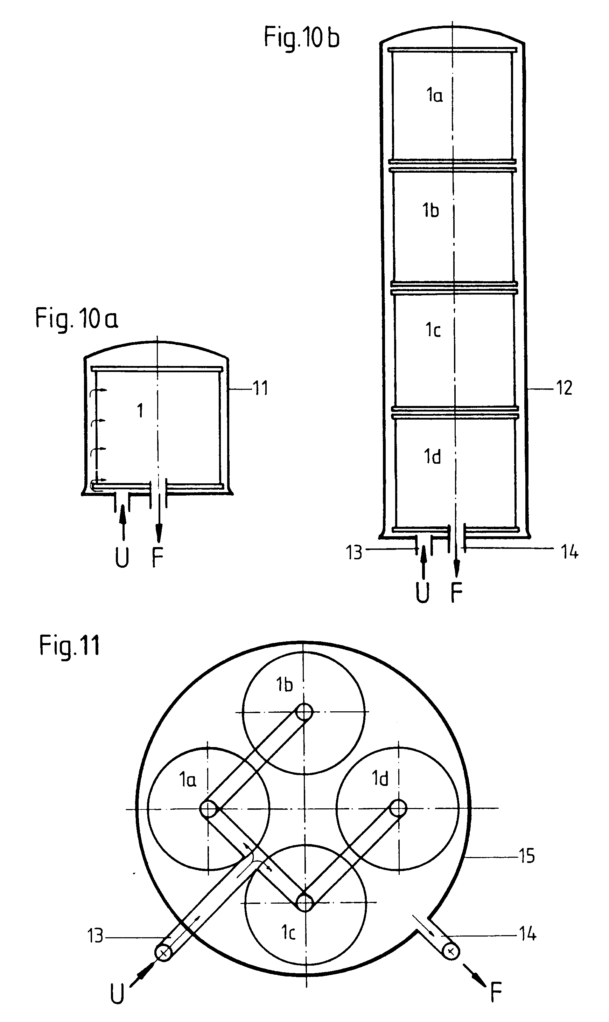

Figur 10a zeigt die Anordnung eines einzelnen Filtermoduls in einem Gehäuse 11, in das auf bekannte Weise Unfiltrat zu- und Filtrat abgeführt wird.

Figur 10b zeigt eine Anordnung, bei welcher mehrere Filtermodule 1a, 1b, 1c und 1d in einem gemeinsamen Gehäuse 12 angeordnet sind. Das Unfiltrat wird über eine Leitung 13 zugeführt und durchströmt die Filtermodule 1a bis 1d parallel von aussen nach innen. Das Filtrat wird über die miteinander verbundenen Lochrohre gemäss Figur 1 bis 9 mittels einer Leitung 14 abgeführt.

Figur 11 zeigt eine Anordnung, bei welcher die Filtermodule 1a bis 1d nebeneinander (und wahlweise übereinander) in einem gemeinsamen Gehäuse 15 angeordnet sind. Das Unfiltrat wird dabei über eine Leitung 13 den Modulen 1a bis 1d von innen her zugeführt, während das Filtrat aussen im Gehäuse 15 gesammelt und über eine Leitung 14 abgeführt wird.

Die in Figur 10b und 11 angedeuteten Filtrationsrichtungen sind umkehrbar.

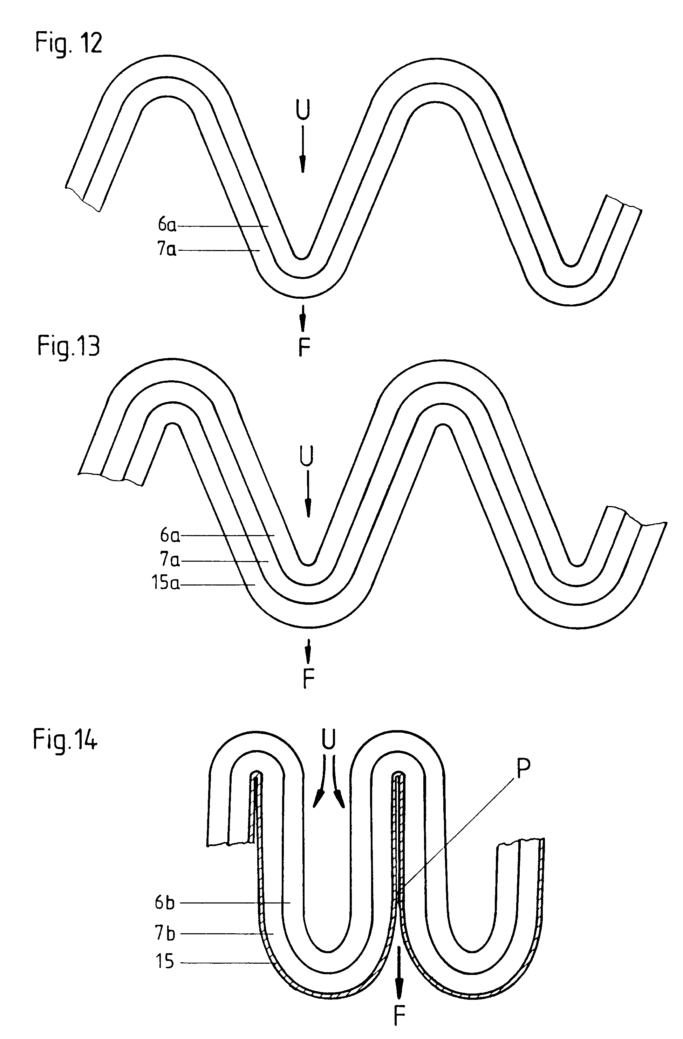

Figur 12 zeigt ein Ausführungsbeispiel, bei dem zwei Filterschicht-Bahnen 6a, 7a gemeinsam plissiert sind. Die Bahn 6a besteht aus der Schichtnummer 4 und die Bahn 7a besteht aus der Schichtnummer 3 gemäss vorstehendem Beispiel. Die Durchströmrichtung des Unfiltrats U ist in Figur 12 durch einen Pfeil angedeutet.

Figur 13 zeigt eine simultan plissierte Dreifachfilterschicht mit drei Filterschichten 6a, 7a und 15a, die in Filtrierrichtung zunehmend feinporiger werden können.

Figur 14 zeigt eine Anordnung, bei welcher auf zwei simultan plissierten Filterschichten 6b, 7b zusätzlich ein Vlies 15 angebracht ist, welches ebenfalls plissiert ist.

Wenn zwei benachbarte Filterschichten, z.B. durch mechanische Verformung oder durch den Druck des Unfiltrats aneinander gepresst werden, wie dies in Punkt P angedeutet ist, besteht die Gefahr, dass die aufeinander gepressten Filterschichten dichtend aneinander anliegen, so dass das Unfiltrat U die Filterschichten 6b, 7b nicht mehr ungehindert durchströmen kann. Durch das Vlies 15 werden die Filterschichten 7b jedoch auf Abstand voneinander gehalten, so dass auch bei einer derartigen Verformung oder Beeinträchtigung die Filterleistung nicht absinkt. Selbstverständlich lassen sich auch einlagige Filterschichten auf die beschriebene Ware mit einem Vlies 15 verstärken.

## Patentansprüche

1. Tiefbettfilter mit einer Schichtdicke von wenigstens 1mm mit einer plissierten, selbsttragenden Filterschicht (6,6a,7,7a,15a), die ein Gemisch von langfaserigem Material und kurzfaserigem Material enthält, wobei die Fasern aus Zellstoff- und/oder Kunstfasern oder aus Keramikfasern oder aus Glasfasern bestehen und wobei die Filterschicht, bezogen auf ihr Gesamtgewicht, wenigstens 20%G Langfasern mit einer Länge von 1mm bis 6mm sowie Kurzfasern mit einer Länge von kleiner als 1mm enthält.

2. Tiefbettfilter nach Anspruch 1, dadurch gekennzeichnet, dass die Filterschicht Filterhilfsstoffe enthält.

3. Tiefbettfilter nach Anspruch 2, dadurch gekennzeichnet, dass die Filterhilfsstoffe Kieselgur und/oder Perlit enthalten.

4. Tiefbettfilter nach einem der vorangegangenen Ansprüche, dadurch gekennzeichnet, dass die Filterschicht wenigstens 5%G Langfasern mit einer Länge von etwa 3mm bis 6mm Länge enthält.

5. Tiefbettfilter nach einem der vorangegangenen Ansprüche, dadurch gekennzeichnet, dass die Filterschicht wenigstens 10%G Langfasern mit einer Länge von 1mm bis 3mm enthält.

6. Tiefbettfilter nach einem der vorangegangenen Ansprüche, dadurch gekennzeichnet, dass die Filterschicht, bezogen auf ihr Gesamtgewicht, wenigstens 20%G Kurz-Fasern mit einer Länge von kleiner als 1mm enthält.

**7.** Tiefbettfilter nach Anspruch 6, dadurch gekennzeichnet, dass der Anteil der Kurzfasern höchstens 50%G beträgt.

**8.** Tiefbettfilter nach einem der vorangegangenen Ansprüche, dadurch gekennzeichnet, dass der Langfaser-Anteil von 1mm bis 6mm höchstens 50%G beträgt.

**9.** Tiefbettfilter nach einem der vorangegangenen Ansprüche, dadurch gekennzeichnet, dass die Zellstoffasern auf einen Wert von 12° bis 25° SR gemahlen sind.

**10.** Tiefbettfilter nach einem der vorangegangenen Ansprüche, dadurch gekennzeichnet, dass der Anteil an Kieselgur und/oder Perlit grösser ist als 20% und kleiner als 50% des Gewichts der Filterschicht.

**11.** Tiefbettfilter nach Anspruch 10, dadurch gekennzeichnet, dass der Anteil etwa 40%G beträgt.

**12.** Tiefbettfilter nach einem der vorangegangenen Ansprüche, dadurch gekennzeichnet, dass die Filterschicht Kunstfasern, vorzugsweise Polyolefinfasern, enthält.

**13.** Verfahren zum Herstellen einer Filterschicht mit einer Schichtdicke von wenigstens 1mm für ein Tiefbettfilter nach Anspruch 1 aus einem Gemisch, das langfaserigen und kurzfaserigen Zellstoff und/oder langfaserige und kurzfaserige Kunstfasern sowie vorzugsweise Kieselgur und/oder Perlit enthält, oder ein Gemisch aus langfaserigen und kurzfaserigen Glasfasern oder Keramikfasern enthält, wobei die Filterschicht mit einem Wassergehalt von wenigstens 5% und höchstens 30% bei einer Temperatur von wenigstens 20°C (Raumtemperatur) und höchstens 150°C plissiert wird.

**14.** Verfahren nach Anspruch 13, dadurch gekennzeichnet, dass die Filterschicht beim Plissieren auf eine Temperatur erhitzt wird, die unterhalb der Sintertemperatur der Kunstfasern liegt.

**15.** Filtermodul (1,1a,1b,1c,1d) zur Stufenfiltration mit einem Gehäuse (11,12,15) mit Fluid-Anschlüssen (13,14), in welchem entweder ein Filterelement oder mehrere im Fluidstrom hintereinander angeordnete Filterelemente mit plissierter Mantelfläche vorgesehen sind, wobei wenigstens ein Filterelement (4,5) ein Tiefbettfilter nach Anspruch 1 ist.

**16.** Filtermodul (1,1a,1b,1c,1d) nach Anspruch 15, dadurch gekennzeichnet, dass die Filterelemente (4,5) zylindrisch ausgebildet sind, unterschiedliche Durchmesser aufweisen und konzentrisch ineinander angeordnet sind.

**17.** Filtermodul (1,1a,1b,1c,1d) nach Anspruch 16, dadurch gekennzeichnet, dass das innere Filterelement zum Anschluss an die Unfiltrat-Leitung (13) vorgesehen ist und dass die Filtrat-Abströmleitung (14) ausserhalb des äusseren Filterelements angeschlossen ist.

**Claims**

**1.** A deep bed filter having a layer thickness of at least 1 mm with a pleated self-supporting filter layer (6, 6a, 7, 7a, 15a) which contains a mixture of long-fibre material and short-fibre materials, wherein the fibres comprise cellulose fibres and/or plastics fibres or ceramic fibres or glass fibres and wherein the filter layer, relative to its overall weight, contains at least 20%wt of long fibres of a length of from 1 mm to 6 mm and short fibres of a length of less than 1 mm.

**2.** A deep bed filter according to claim 1 characterised in that the filter layer contains filter additives.

**3.** A deep bed filter according to claim 2 characterised in that the filter additives include kieselguhr and/or perlite.

**4.** A deep bed filter according to one of the preceding claims characterised in that the filter layer contains at least 5%wt of long fibres of a length of from about 3 mm to 6 mm.

**5.** A deep bed filter according to one of the preceding claims characterised in that the filter layer contains at least 10%wt of long fibres of a length of from 1 mm to 3 mm.

6. A deep bed filter according to one of the preceding claims characterised in that the filter layer, relative to its overall weight, contains at least 20%wt of short fibres of a length of less than 1 mm.

7. A deep bed filter according to claim 6 characterised in that the proportion of short fibres is at most 50%wt.

8. A deep bed filter according to one of the preceding claims characterised in that the long fibre proportion of from 1 to 6 mm is at most 50%wt.

9. A deep bed filter according to one of the preceding claims characterised in that the cellulose fibres are ground to a value of 12° to 25° SR.

10. A deep bed filter according to one of the preceding claims characterised in that the proportion of kieselguhr and/or perlite is greater than 20% and less than 50% of the weight of the filter layer.

11. A deep bed filter according to claim 10 characterised in that the proportion is about 40%wt.

12. A deep bed filter according to one of the preceding claims characterised in that the filter layer contains plastics fibres, preferably polyolefin fibres.

13. A process for the production of a filter layer of a layer thickness of at least 1 mm for a deep bed filter according to claim 1 from a mixture which contains long-fibre and short-fibre cellulose and/or long-fibre and short-fibre plastics fibres and preferably kieselguhr and/or perlite, or contains a mixture of long-fibre and short-fibre glass fibres or ceramic fibres, wherein the filter layer is pleated with a water content of at least 5% and at most 30% at a temperature of at least 20°C (ambient temperature) and at most 150°C.

14. A process according to claim 13 characterised in that in the pleating operation the filter layer is heated to a temperature which is below the sintering temperature of the plastics fibres.

15. A filter module (1, 1a, 1b, 1c, 1d) for stepped filtration comprising a housing (11, 12, 15) with fluid connections (13, 14), in which there is provided either a filter element or a plurality of filter elements which are arranged in succession in the flow of fluid, with a pleated peirpheral surface, wherein at least one filter element (4, 5) is a deep bed filter according to claim 1.

16. A filter module (1, 1a, 1b, 1c, 1d) according to claim 15 characterised in that the filter elements (4, 5) are of a cylindrical configuration, are of different diameters and are arranged concentrically one within the other.

17. A filter module (1, 1a, 1b, 1c, 1d) according to claim 16 characterised in that the inner filter element is intended for connection to the unfiltrate conduit (13) and that the filtrate discharge flow conduit (14) is connected outside the outer filter element.

**Revendications**

1. Filtre à lit épais présentant une épaisseur de couche d'au moins 1 mm et comportant une couche filtrante autoporteuse plissée (6, 6a, 7, 7a, 15a) qui contient un mélange de matériau à libres longues et de matériau à fibres courtes, les fibres se composant de libres de cellulose et/ou de fibres synthétiques ou de fibres céramiques ou de fibres de verre, et la couche filtrante contenant, par rapport à son poids total, au moins 20% en poids de libres longues de 1 mm à 6 mm ainsi que des libres courtes de moins de 1 mm.

2. Filtre à lit épais selon la revendication 1, caractérisé en ce que la couche filtrante contient des substances filtrantes auxiliaires.

3. Filtre à lit épais selon la revendication 2, caractérisé en ce que les substances filtrantes auxiliaires contiennent de la diatomite et/ou de la perlite.

**4.** Filtre à lit épais selon l'une des revendications précédentes, caractérisé en ce que la couche filtrante contient au moins 5% en poids de fibres longues d'environ 3 mm à 6 mm.

**5.** Filtre à lit épais selon l'une des revendications précédentes, caractérisé en ce que la couche filtrante contient au moins 10% en poids de libres longues de 1 mm à 3 mm.

**6.** Filtre à lit épais selon l'une des revendications précédentes, caractérisé en ce que la couche filtrante contient, par rapport à son poids total, au moins 20% en poids de libres courtes de moins de 1 mm.

**7.** Filtre à lit épais selon la revendication 6, caractérisé en ce que la proportion de libres courtes est de 50% en poids au maximum.

**8.** Filtre à lit épais selon l'une des revendications précédentes, caractérisé en ce que la proportion de libres longues de 1 mm à 6 mm est de 50% en poids au maximum.

**9.** Filtre à lit épais selon l'une des revendications précédentes, caractérisé en ce que les fibres de cellulose sont broyées à une valeur de 12° à 25° SR.

**10.** Filtre à lit épais selon l'une des revendications précédentes, caractérisé en ce que la proportion de diatomite et/ou de perlite est supérieure à 20% et inférieure à 50% du poids de la couche filtrante.

**11.** Filtre à lit épais selon la revendication 10, caractérisé en ce que cette proportion est d'environ 40% en poids.

**12.** Filtre à lit épais selon l'une des revendications précédentes, caractérisé en ce que la couche filtrante contient des fibres synthétiques, de préférence des fibres de polyoléfine.

**13.** Procédé pour la fabrication d'une couche filtrante d'une épaisseur d'au moins 1 mm pour un filtre à lit épais selon la revendication 1, à partir d'un mélange qui contient de la cellulose à fibres longues et à fibres courtes et/ou des fibres synthétiques longues et courtes et de préférence de la diatomite et/ou de la perlite, ou d'un mélange de fibres de verre longues et courtes ou de fibres céramiques, la couche filtrante étant plissée, avec une teneur en eau de 5% minimum et de 30% maximum, à une température de 20°C minimum (température ambiante) et de 150°C maximum.

**14.** Procédé selon la revendication 13, caractérisé en ce que la couche filtrante est chauffée, lors du plissage, à une température qui est inférieure à la température de frittage des fibres synthétiques.

**15.** Module filtrant (1, 1a, 1b, 1c, 1d) pour la filtration échelonnée, comportant un carter (11, 12, 15) pourvu de raccordements de fluide (13, 14), dans lequel il est prévu un élément filtrant ou plusieurs éléments filtrants à surface latérale plissée disposés les uns derrière les autres dans le courant du fluide, au moins un élément filtrant (4, 5) étant un filtre à lit épais selon la revendication 1.

**16.** Module filtrant (1, 1a, 1b, 1c, 1d) selon la revendication 15, caractérisé en ce que les éléments filtrants (4, 5) ont une forme cylindrique, présentent des diamètres différents et sont disposés les uns dans les autres de façon concentrique.

**17.** Module filtrant (1, 1a, 1b, 1c, 1d) selon la revendication 16, caractérisé en ce que l'élément filtrant intérieur est prévu pour être raccordé à la conduite de produit à filtrer (13), et en ce que la conduite d'évacuation de filtrat (14) est raccordée à l'extérieur de l'élément filtrant extérieur.

Fig. 1

Fig. 2

Fig. 3

Fig. 4

Fig. 5

Fig. 6

Fig. 7

Fig. 8

1

7

6

9

8

4

5

Fig. 9

1

7

6

10

8

4

5

Fig.10 b

Fig.10 a

Fig.11

Fig. 12

6a

7a

U

F

Fig. 13

6a

7a

15a

U

F

Fig. 14

U

P

6b

7b

15

F